# EUROPEAN PATENT APPLICATION

(11) **EP 4 435 255 A1**
(43) Date of publication of application: **25.09.2024**
(21) Application number: 23163718.2
(22) Date of filing: 23.03.2023
(51) Int. Cl.: F03D 17/00

(54) **METHOD FOR MONITORING THE HEALTH CONDITION OF WIND TURBINE SYSTEM**

(71) Applicant: Siemens Gamesa Renewable Energy A/S, 7330 Brande (DK)
(72) Inventor: Nielsen, Jesper Hjortshøj, 8260 Viby J (DK); Orlowitz, Esben, 7200 Grindsted (DK)
(74) Representative: SGRE-Association

(57) **Abstract**

The invention relates to a method for monitoring the health condition of a wind turbine system, the method comprising the steps of:
a) measuring a first and a second dynamic signal of a component of the wind turbine system;
b) sampling the first and the second dynamic signals with a given sampling frequency (fₛ) for receiving a first sampled signal and a second sampled signal, where the sampling is executed by a processing unit;
c) processing the first and the second sampled signals by establishing at least one differential value between the first sampled signal and the second sampled signal, where the at least one differential value is used for health condition of the wind turbine system or one of its components;

The method is characterized in that the first and the second dynamic signals are fed to the processing unit without undergoing signal shaping before being sampled, and that the first and the second dynamic signals are measured with the same sensor at different points in time.

## Description

The present invention relates to a method and an apparatus for monitoring the health condition of wind turbine system, a computer program and a wind turbine system.

The use of condition monitoring systems for wind turbine systems has increased significantly in the recent years as components of a wind turbine system have increased in size and the components are also designed closer to material limits. Using a condition monitoring system, it is possible to continuously detect the activity of the wind turbine system, and its components, during normal use. Abnormalities in the function of the wind turbine system may be detected early, such as damage or wear to the component and removed in time before a full breakdown of the wind turbine system.

Condition monitoring systems typically comprise several different sensors for measuring respective signals from parts and components, respectively, of a wind turbine system, with the purpose of monitoring the condition of the associated part or component. Depending on the sensor type, processing of sensor signals with high sampling rates may be necessary, in particular for those signals which have a dynamic behavior due to rapid variations over time. This is the case, for example, when measuring accelerations, vibrations or acoustic signals.

Dynamic sensor signals thus require hardware which can accommodate the huge amount of data collected during measuring. Such processing hardware is typically more expensive than hardware for lower sampling rates. In addition, high sampling rates generate more data than lower sample rates which require higher demands of signal processing power of the required sensor signals. Moreover, a larger data storage capacity is needed.

Up to now, two approaches are used to avoid exceeding amount of processing data. A first approach is based on measuring short snapshots of data, e.g. a couple of minutes every hour, where the remaining minutes of this hour of data is not measured. The first approach can be used for condition monitoring of a drive train, when storing time series, spectra etc. A second approach is based on data reduction. Instead of storing and/or transporting time data with a high number of samples, data reduction methods are applied, such as spectral analysis or envelop analysis. As a drawback, such data reduction methods are irreversible and are depending on chosen settings. Hence, no time data is available for further investigation.

None of these two approaches solves the need for processing hardware that can handle high sampling rates, nor the need for high signal-processing power.

EP 2 122 430 B1 discloses a method for monitoring the health condition of a rotor of wind energy plant. The method comprises the steps of measuring activity signals of the blades in the rotor, establishing differential values between the activity signals of the different blades, wherein the differential values are used for monitoring the health condition of the rotor in the wind energy plant. The activity signals may be measured with acoustic sensors in contact with the structural means of the rotor, e.g. the strength and structure of blades. The method as described in EP 2 122 430 B1 requires a plurality of sensors resulting in a huge amount of the sensor data, too. Furthermore, no approach is described how the processing of data can be eased and the amount of data to be stored can be reduced.

It is an object of the present invention to provide a method and an apparatus for monitoring the health condition of a wind turbine system which is capable to process dynamic signals with high sampling rates without the necessity of the exceeding storage capacity and high processing power.

These objects are solved by the independent claims. Preferred embodiments are set out in the dependent claims.

The invention provides a method for monitoring the health condition of a wind turbine system. Monitoring the health condition may relate to the wind turbine system at all or respective components of the wind turbine system, such as its rotor or the blades, the nacelle, the drive train, drive components and so on.

In step a), a first and a second dynamic signal of a component of the wind turbine system are measured. In the following, the term "dynamic signal" refers to an analog signal which varies rapidly over time. In particular, the first and the second dynamic signals may be measured with acceleration or vibration sensors. Alternatively, the first and the second dynamic signals may be measured with acoustic sensors. However, other dynamic signals may be measured as well.

In step b), the first and the second dynamic signals are sampled with a giving sampling frequency for receiving a first sampled signal and a second sampled signal. Sampling is executed by a processing unit which is also referred to as a sampling unit. More specifically, the processing unit or sampling unit is an analog-digital-converter (ADC). The term "given sampling frequency" is to be understood that the sampling frequency is sufficient high to acquire the dynamics of the dynamic signal. In particular, the sampling frequency used for sampling the first and the second dynamic signals may be greater than 100 Hz, 500 Hz, 1 kHz, 2 kHz, 5 kHz or 10 kHz.

In step c), the first and the second sampled signals are processed by establishing at least one differential value between the first sampled signal and the second sampled signal. The at least one differential value is used for health condition of the wind turbine system or one of its components. The term "differential value" means that a mathematic operation is applied to the first sampled signal and the second sampled signal, the result of which corresponds to the differential value or allows deriving the differential value. Any mathematic relationship between the first and the second sampled signals being suitable to determine a change or difference between the first and the second sampled signals may be used.

According to the invention, the first and the second dynamic signals are fed to the processing unit (i.e. sampling unit) without undergoing signal shaping before being sampled. The term "signal shaping" refers to any kind of filtering of the first and the second dynamic signals. More specifically, no low-pass-filtering is executed. Furthermore, the first and the second dynamic signals are measured with the same sensor at different points in time. The term "same sensor" means that the first dynamic signal is measured with a specific sensor and the second dynamic signal is measured at a later point in time with this (specific) sensor again.

The method of the invention provides an easy and straightforward method for monitoring the health condition of wind turbine system and any of its components. To do so, the first and the second dynamic signals are fed to the processing unit without being filtered before being sampled. Thus, an aliasing effect takes place and will be considered during further processing.

Aliasing is an effect that causes different signals to become indistinguishable (or aliases of one another) when sampled with a given sampling frequency (fₛ). The frequency content of the measured dynamic signal consist of a mixture of theoretical frequencies up until infinity. The theory of aliasing is known as "sampling theorem" or "Nyquist-Shannon sampling theorem" and is well-known in the prior art.

This procedure according to the invention is in contrast to state-of-the-art signal processing which tries to avoid aliasing when measuring dynamic signals. Conventional hardware for measuring and processing dynamic signals includes therefore a so-called anti-aliasing filter before the sampling unit in order to prevent aliasing. If no anti-aliasing filter is used before sampling the measured dynamic signal, the physical meaning of the measured signal disappears.

As the present method does not make use of an anti-aliasing filter before the processing unit (sampling unit), any frequency component fₐ in the measured signal above the so-called Nyquist-frequency will be mapped and aliased, respectively, into the frequency range below the Nyquist-frequency. The Nyquist-frequency corresponds to half of the given sampling frequency, i.e. fₛ/2. The frequency component fₐ in the measured signal will be present as a frequency component f_{b} below the Nyquist-frequency (even though the real frequency is fₐ above the Nyquist-frequency) causing the above-mentioned mixture of real frequencies and aliased frequencies.

As the first and second dynamic signals are measured with the same sensor on one of its components of the wind turbine system at different point in time, a differential value can be calculated between sampled first and second signals originating from the same sensor. If a (any) difference between the first and the second sampled signals occurs, it can be concluded that something has changed without having a specific meaning of what a problem might be. However, monitoring this unspecific change enables monitoring the health condition of the wind turbine system.

Thus, the method suggested is based on allowing aliasing to happen when measuring dynamic signals although the physical meaning of the sampled signals is corrupted. Because for monitoring of changes of dynamic responses of the wind turbine system or the component the sensor is mounted on, it is not necessarily important to know the physical occurrence of the change. For health monitoring, it is sufficient to know something has changed without knowing the physical occurrence.

According to a preferred embodiment, monitoring is performed continuously, with predefined intervals. Alternatively or in addition, monitoring may be initiated in response to a detected abnormal situation.

In a further embodiment of the present invention, a first integral over the first sample signal and a second integral over the second sampled signal may be computed. A difference between the first and the second integral represents the at least one differential value.

Alternatively or additionally, respective first parameters of peaks in the first sampled signals and respective second parameters of peaks in the second sampled signals may be computed. A respective parameter difference value of corresponding peaks in the first and the second sampled signals may becalculated. Each parameter difference value may be compared to a predefined threshold value in order to determine whether the first and the second dynamic signals are similar signals or not. The resulting difference represents the at least one differential value.

In particular, the first and the second parameters of peaks comprise at least one of an amplitude of the peak and a frequency of the peak.

According to a further preferred embodiment, the first and the second dynamic signals are filtered before being sampled by the processing unit, wherein the filtering comprises one of high-pass-filtering, band-pass-filtering or bent-stop-filtering. In contrast, an anti-aliasing filter is a low-pass-filter which cuts off any frequencies above the Nyquist-frequency. By applying an analog filtering device before a processing unit for sampling the data, a reduction of the amount of frequency mixing by aliasing can be achieved. Using specific kind of filters which allow to pass frequencies above the Nyquist-frequency enables reconstruction of the real signal above the Nyquist-frequency without the necessity to increase the given sampling rate.

Besides the above method, the invention refers to a computer program product with program code for carrying out the method according to the invention or one or more preferred embodiments thereof when the program code is executed on a computer.

Moreover, the invention refers to an apparatus for monitoring the health of condition of a wind turbine system, where the apparatus comprises a processor configured to perform the method according to the invention or one or more preferred embodiments of the method according to the invention.

Moreover, the invention refers to a wind turbine system, wherein the wind turbine system comprises an apparatus according to the invention or one or more preferred embodiments thereof.

The invention will now be described in detail with respective to the accompanying drawings.
- Fig. 1: shows a schematic illustration of a signal processing path of a known apparatus for monitoring the health condition of a wind turbine system;
- Fig. 2: shows a schematic illustration of a signal processing path of an apparatus for monitoring the health condition of a wind turbine system according to a first embodiment of the invention;
- Fig. 3: shows a schematic illustration of a signal processing path of an apparatus for monitoring the health condition of a wind turbine system according to a second embodiment of the invention;
- Fig. 4: shows an amplitude-frequencies-diagram illustrating the frequency curves of a real signal and an aliased signal where the real signal is not filtered with an anti-aliasing filter prior to sampling;
- Fig. 5: shows an amplitude-frequencies-diagram illustrating two frequency curves, where a difference plane between the two curves represents a differential value; and
- Fig. 6: shows an amplitude-frequencies-diagram illustrating band-pass-filtering of a measured dynamic signal leading to an aliasing.

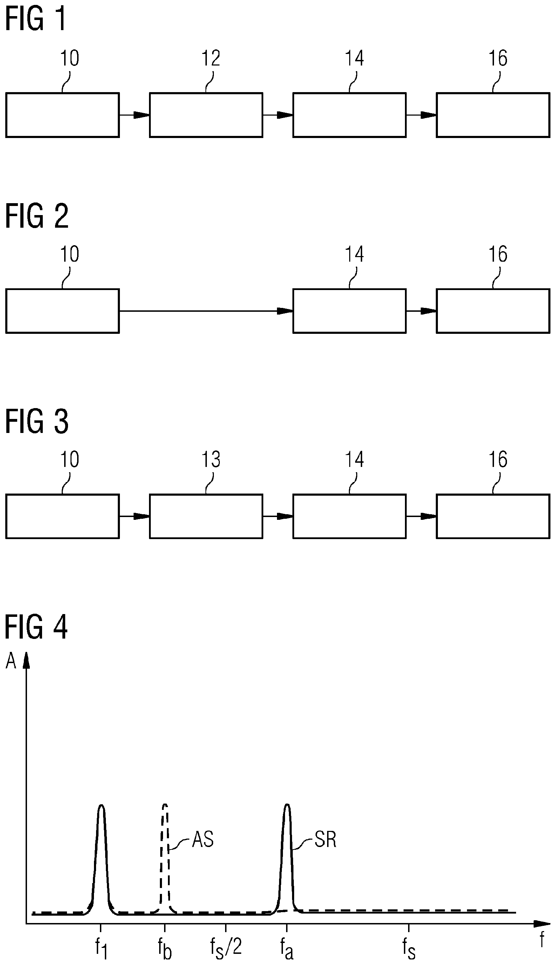

Fig. 1 shows a schematic illustration of a signal processing path according to the prior art. A sensor 10 is adapted to measure a dynamic signal. The dynamic signal is an analog signal which varies rapidly over time. For example, the sensor 10 may be an acceleration sensor, a vibration sensor or a microphone. Due to the nature of the dynamic signal, high sampling rates are needed in order to ensure that relevant signal information will not be lost. The analog sensor data is then fed to an anti-aliasing filter 12. The anti-aliasing filter is a low-path-filter which ensures an attenuation of the analog signal at the Nyquist-frequency. The Nyquist-frequency corresponds to half of the sampling frequency fₛ (i.e. f_{f}/2) which is used by a sampling unit 14 (analog-digital-converter, ADC) during sampling. The sampled signal is fed to a processing unit 16 for further processing or directly stored in a suitable database or data storage.

The anti-aliasing filter 12 ensures that the phenomenon of aliasing is avoided. The anti-aliasing filter 12 ensures that the sampled signal is not a mixture of theoretical frequencies between fₛ/2 (Nyquist-frequency) up until infinity and real frequencies below fₛ/2 (Nyquist-frequency). If the anti-aliasing filter 12 were not present in the signal path, the physical meaning of the measured dynamic signal provided by the sensor 10 would disappear. The theory about aliasing is known as "sampling theorem" or "Nyquist-Shannon sampling theorem" and is well-known.

Fig. 4 illustrates aliasing in an amplitude-frequency-diagram (A-f-diagram). The sampling frequency of the sampling unit 14 is given and corresponds to fₛ. The Nyquist-frequency corresponds to fₛ/2. The diagram shows two frequency curves SR (solid line) and AS (dotted line). The frequency curve SR having two peaks at f = f₁ and f = fₐ corresponds to the real signal. The frequency curve AS (measured signal) resulting from sampling of SR without applying an anti-aliasing filter has a peak at f = f_{b} instead of the peak at fₐ. The peak at f = f_{b} is a result of aliasing. Without the anti-aliasing filter 12 before the sampling unit 14, the frequency component fₐ is mapped/aliased to the frequency range below the Nyquist-frequency at fₛ/2 and be present as the frequency component f_{b}. The frequency component f_{b} corresponds to f_{b} = fₛ - fₐ even though the real frequency peak is fₐ. Hence, without an anti-aliasing filter 12 before the sampling unit 14, frequency curve AS would show up consisting of a mixture between real frequency components and mapped/aliased frequency components. In contrast, if the anti-aliasing filter 12 is present the ADC 14, all frequency components above the Nyquist-frequency fₛ/2 will be suppressed (not shown in Fig. 4) and the frequency component of the frequency curve, fₐ, will not be mapped to f_{b}.

The present invention is, however, based on the consideration that the aliasing-effect can be used for monitoring the health condition of a wind turbine system and its components. Thus, the signal processing chain according to a first embodiment of the invention is as shown in Fig. 2. The dynamic analog signal measured by the sensor 10 is directly fed to the sampling unit 14 (ADC) where the dynamic signal is sampled with the given sampling frequency fₛ. The sampled signal is then fed to the processing unit 16 for further processing or directly stored in a suitable database or data storage.

Monitoring of the health condition of the wind turbine system will be done be comparing two sampled signals which have been measured with the same sensor at different points in time. Change detection is thus possible although the physical meaning of the sampled signal is corrupted due to aliasing. This is because for monitoring of changes of dynamic behaviors of the wind turbine system and its components, it is not necessarily important to know the physical occurrence of the change. Either it can be enough to know something has changed or by experience, where specific changes can be associated with specific failure modes. Thus, it is not necessary to have knowledge about the physical occurrence.

The present method allows to gather information in the real signal SR at higher frequencies than fₛ/2 which cannot be achieved when applying anti-aliasing filters. Thus, the frequency component fₐ above fₛ/2 is mapped to f_{b} and therefore present in the available area below the Nyquist-frequency, in addition to the frequency peak at f₁ (sampled signal AS). That means, in contrast to the situation where anti-aliasing is executed, a plurality of frequency peaks can be used for analyzing alternations and changes in the behavior in the wind turbine system and its components. However, what is not possible, is to find out whether the peaks at f₁ and f_{b} are part of the real signal (SR) or result of the aliasing.

In order to monitor the health condition of the wind turbine, a first and a second dynamic signal are measured with the same sensor 10 on the wind turbine system or a specific component at different points in time. Then, each of the first and the second dynamic signals will be fed to the sampling unit 14 without undergoing signal shaping, in particular low-pass-filtering, before being sampled by the sampling unit 14. The first and second sampled signals are processed by the processing unit 16 by establishing at least one differential value between the first sampled signal and the second sampled signal, where the at least one differential value is used for health condition of the component of the wind turbine system.

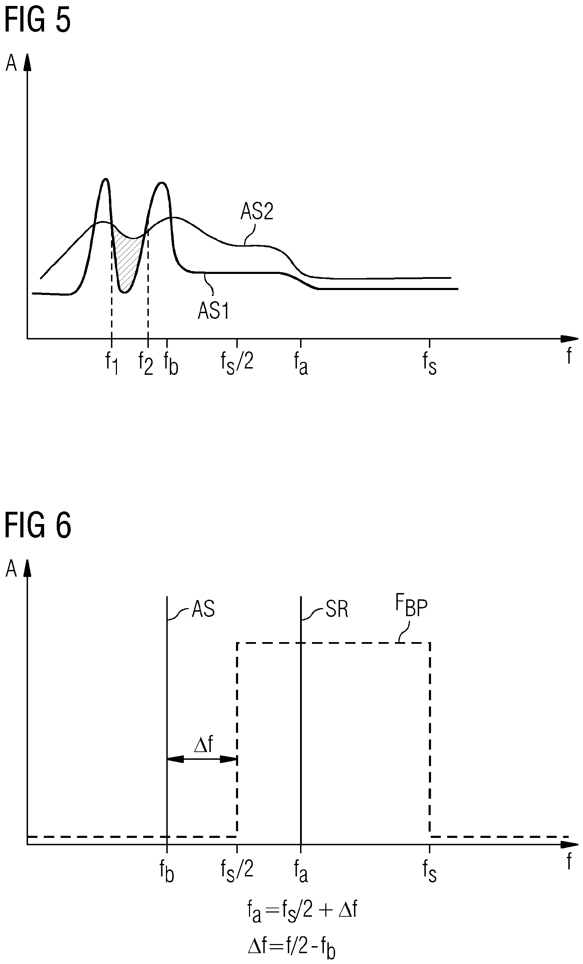

For example, due to a varying health condition of the wind turbine system or one of its components where the sensor is located, different sampled signal result from. This is shown in an exemplary way in Fig. 5. Fig. 5 shows an amplitude-frequency-diagram (A-f-diagram) with two sampled signals AS1 and AS2 which correspond to measurements with the same sensor at different points in time. The differential value may be represented by the area between the two curves AS1, AS2. In order to determine the area between the two curves, for example in an area of interest between frequencies f₁ and f₂, a first integral over the first sampled signal AS1 and a second integral over the second sampled signal AS2 are computed. The difference between the first and the second integral represents than the at least one differential value.

Alternatively, it can be found out whether the frequency and/or amplitude of a frequency peak varies over the time. For example, respective first parameters of peaks in the first sampled signal and respective second parameters of peaks in the second sampled signals are computed. A respective parameter difference value of corresponding peaks in the first sampled signal and the second sampled signal is calculated, wherein each parameter difference value may be compared to a predetermined threshold value in order to determine whether the first and the second dynamic signals are similar signals or not. Such a comparison can be made with respect to the amplitude of the peak and/or the frequency of the peak.

In addition to the above, the method can be further optimized or focused on specific frequency ranges (see for example the area between frequencies f₁ and f₂) that are known or leaned to be of interest. This can be made by introducing an analog filter 13 being one of a high-pass-filter, a band-pass-filter or a band-stop-filter (see Fig. 3). The filter 13 is placed between the sensor 10 and the sampling unit 14, i.e. before the analog signal is fed to sampling unit 14. The respective filters let pass at least part of frequencies above the Nyquist-frequency. For example, if the signal content between fₛ/2 to fₛ is of interest (see Fig. 6) an analog high-pass-filter with a cut-off frequency at fₛ/2 is placed before the sampling unit 14 which removes or attenuates the signal content between 0 and fₛ/2. Then, a frequency component present at fₐ being greater than fₛ/2 will be aliased to frequency component f_{b} below fₛ/2. When analyzing the area of interest below fₛ/2, the frequency component f_{b} is present in the signal to be analyzed. By doing so, an information about real frequency components above the Nyquist-frequency can be gathered.

The invention is based on the consideration that normally aliasing is avoided. In this method for monitoring the health condition of a wind turbine system aliasing is used for the use case of health monitoring by means of detecting changes and structural responses in the resulting signal. As an advantage, the processing unit 16 does not need to be as powerful compared to the situation where an anti-aliasing filter is used, the sampling frequency can be made smaller compared to the state of the art and the amount of acquired data can be reduced. The method provided makes monitoring the health condition more cost-effective and enables more options for processing data of wind turbine systems because of a reduction of data.

Independent of the grammatical term usage, individuals with male, female or other gender identities are included within the term.

## Claims

1. Method for monitoring the health condition of a wind turbine system, the method comprising the steps of:
a) measuring a first and a second dynamic signal of a component of the wind turbine system;
b) sampling the first and the second dynamic signals with a given sampling frequency (fₛ) for receiving a first sampled signal and a second sampled signal, where the sampling is executed by a processing unit;
c) processing the first and the second sampled signals by establishing at least one differential value between the first sampled signal and the second sampled signal, where the at least one differential value is used for health condition of the wind turbine system or one of its components;
**characterized in that**
- the first and the second dynamic signals are fed to the processing unit without undergoing signal shaping before being sampled; and
- the first and the second dynamic signals are measured with the same sensor at different points in time.

2. Method according to claim 1, wherein the sampling frequency is greater than 100 Hz, 500 Hz, 1 kHz, 2 kHz, 5 kHz or 10 kHz.

3. Method according to claim 1 or 2, wherein the first and the second dynamic signals are measured with acceleration sensors.

4. Method according to one of the preceding claims, wherein the first and the second dynamic signals are measured with acoustic sensors.

5. Method according to one of the preceding claims, wherein the monitoring is performed continuously, with predefined intervals.

6. Method according to one of the preceding claims, wherein a first integral over the first sampled signal and a second integral over the second sampled signal are computed, wherein a difference between the first and the second integral represents the at least one differential value.

7. Method according to one of the preceding claims, wherein respective first parameters of peaks in the first sampled signals and respective second parameters of peaks in the second sampled signals are computed, wherein a respective parameter difference value of corresponding peaks in the first sampled signal and the second sampled signal is calculated, wherein each parameter difference value is compared to a predefined threshold value in order to determine whether the first and the second dynamic signals are similar signals or not.

8. Method according to claim 7, wherein the first and second parameters of peaks comprise at least one of an amplitude of the peak and a frequency of the peak.

9. Method according to one of the preceding claims, wherein the first and the second dynamic signals are filtered before being sampled by the processing unit, wherein filtering comprises one of high-pass-filtering, band-pass-filtering or band-stop-filtering.

10. Computer program product with program code, which is stored on a non-transitory machine-readable carrier, for carrying out a method according to one of claims 1 to 9 when the program code is executed on a computer.

11. Apparatus for monitoring the health condition of a wind turbine system, wherein the apparatus comprises a processor configured to perform during the operation of the wind turbine system the following steps:
a) measuring a first and a second dynamic signal of a component of the wind turbine system;
b) sampling the first and the second dynamic signals with a given sampling frequency (fₛ) for receiving a first sampled signal and a second sampled signal, where the sampling is executed by a processing unit ;
c) processing the first and the second sampled signals by establishing at least one differential value between the first sampled signal and the second sampled signal, where the at least one differential value is used for health condition of the wind turbine system or one of its components;
**characterized in that**
- the first and the second dynamic signals are fed to the processing unit without undergoing signal shaping before being sampled; and
- the first and the second dynamic signals are measured with the same sensor at different points in time.

12. Apparatus according to claim 11, wherein the apparatus is configured to perform a method according to one of claims 2 to 9.

13. Wind turbine system, wherein the wind turbine system comprises an apparatus according to claim 11 or 12.
